# EUROPÄISCHE PATENTSCHRIFT

(11) **EP 0 839 772 B1**
(45) Veröffentlichungstag und Bekanntmachung des Hinweises auf die Patenterteilung: **04.08.2004**
(21) Anmeldenummer: 97118117.7
(22) Anmeldetag: 18.10.1997
(51) Int. Cl.: C03C 21/00, C03C 3/091, C03C 3/093

(54) **Verwendung eines Glaskörpers zur Erzeugung eines chemisch vorgespannten Glaskörpers**
Use of a glass body for the production of a chemical tempered glass body
Utilisation d'un article en verre pour la production d'un article en verre trempé chimiquement

(30) Priorität: 30.10.1996 DE 19643870
(43) Veröffentlichungstag der Anmeldung: 06.05.1998
(73) Patentinhaber: Schott Glas, 55122 Mainz (DE); CARL-ZEISS-STIFTUNG trading as Schott Glas, 55122 Mainz (DE)
(72) Erfinder: Gros, Oliver, 55494 Rheinböllen (DE); Melson, Sabine Dr., 55124 Mainz (DE); Leroux, Roland, Dr., 55271 Stadecken-Elsheim (DE); Becker, Otmar, Dr., 63225 Langen (DE); Busch, Dietrich, Newton Aycliffe, Country Durham, DL5 7PX (GB)

(56) Entgegenhaltungen:
- EP-A- 0 588 000
- EP-A- 0 638 526
- WO-A-96/01792
- DE-C- 4 430 710
- CHEMICAL ABSTRACTS, vol. 108, no. 12, 21.März 1988 Columbus, Ohio, US; abstract no. 99909m, Seite 348; XP000015540 -& CS 240 148 B (MATOUSEK) 15.Juni 1987
- DATABASE WPI Section Ch, Week 8343 Derwent Publications Ltd., London, GB; Class L01, AN 83-798139 XP002056458 -& JP 58 156 554 A (NIPPON ELECTRIC GLASS CO) , 17.September 1983

## Beschreibung

Die Erfindung betrifft die Verwendung eines Glaskörpers, insbesondere in Form einer Glasplatte oder Glasscheibe, zur Erzeugung eines chemisch vorgespannten Glaskörpers.

Die Festigkeit von Glasgegenständen kann dadurch verbessert werden, daß die dem Glas gefährlich werdenden Zugspannungen in der Oberfläche gemildert werden. Dies wird erreicht, indem die Glasoberfläche unter Druckspannungen gesetzt wird. Dieser Vorgang wird oft auch als Härtung bezeichnet. Ein Bruch tritt erst dann ein, wenn eine Beanspruchung mindestens die Höhe der Druckspannungen erreicht hat.

Neben dem thermischen Härten, dem Abschrecken von Glasgegenständen sind verschiedene Verfahren des chemischen Vorspannens bekannt. Sie beruhen auf Ionenaustauschvorgängen. Es gibt dabei sowohl Verfahren, die oberhalb der Transformationstemperatur Tg des jeweiligen Glases durchgeführt werden, als auch solche, bei denen unterhalb Tg gearbeitet wird. Die erstgenannten haben den Nachteil, daß oberhalb Tg eine Deformation des Glasgegenstandes eintreten kann.

Um unterhalb von Tg im praktisch starren Glasnetzwerk durch Ionenaustausch Druckspannungen zu erzeugen, müssen in Glas vorhandene Ionen mit kleinem Durchmesser an der Oberfläche durch Ionen mit größerem Durchmesser ersetzt werden.

Zu diesem Austausch sind aufgrund ihrer guten Beweglichkeit Alkaliionen befähigt. So werden beispielsweise bei einem Kalk-Natron-Glas in einem Kaliumsalzbad Na⁺-Ionen aus dem Glas in das Salzbad und K⁺-Ionen aus dem Bad in das Glas wandern. Es handelt sich hierbei um Diffusionsprozesse. Ein diffundierendes Ion überschreitet eine der Ladung proportionale Potentialbarriere; daher ist es, wie schon von Schroder und Gliemeroth (Naturwissenschaften, 1970, 57, 537) dargelegt, nicht zu erwarten, daß Ionen mit zweifacher positiver Ladung und mit gegenüber den Alkalien relativ kleinem Radius bei den für die Diffusion von Alkaliionen ausreichenden mäßig hohen Temperaturen, wie sie aufgrund der beschriebenen Bedeutung von Tg für diese Verfahren zur chemischen Härtung erforderlich sind, wanderungsfähig sind. So konzentriert sich auch die Fach- und Patentliteratur auf Verfahren zum Austausch von Alkaliionen (Li⁺, Na⁺) aus dem Glas heraus bzw. Alkaliionen (Na⁺, K⁺) oder auch anderen einwertigen Ionen (Ag⁺, Au⁺) ins Glas hinein.

Ein zum chemischen Vorspannen geeignetes Glas benötigt einen ausreichenden Gehalt an austauschfähigen Ionen, nach Lehrmeinung also an Alkaliionen.

Die für viele Verwendungszwecke erforderliche Temperaturunterschiedsfestigkeit von Glasgegenständen, d. h. die Eigenschaft, beispielsweise einer Scheibe, der Temperaturdifferenz zwischen heißer Scheibenmitte und kaltem Scheibenrand standzuhalten, wird nun gerade durch eine Verringerung des Alkaligehalts im Glas erreicht bzw. verbessert. Berühmtes Beispiel ist die Gruppe der Borosilicatgläser, die aufgrund ihres geringen thermischen Ausdehnungskoeffizienten α sehr gute Temperaturwechsel- und Temperaturunterschiedsfestigkeiten aufweisen.

Und so galten Borosilicatgläser seit Jahrzehnten (s. wieder Schröder und Gliemeroth, Naturwissenschaften **1970**, *57*, 538) als nicht chemisch härtbar, was auch durch erfolglose Versuche des chemischen Vorspannens bei einem der bekanntesten Vertreter der Borosilicatgläser, einem Borosilicatglas 3.3 (Zusammensetzung in Gew.-% auf Oxidbasis: SiO₂ 80,9; B₂O₃ 12,8; Al₂O₃ 2,4; Na₂O 3,3; K₂O 0,6) noch bekräftigt wurde (s. unten). Und so wird auch in EP 0588 000 A1, die Zusammensetzungen chemisch und thermisch hochbelastbarer Borosilicatgläser beschreibt, die Möglichkeit der chemischen Vorspannbarkeit.nicht erwähnt.

Zwar soll laut Aufgabe zur in WO 96/01792 A1 beschriebenen Erfindung, die ein Verfahren des mehrfachen thermischen oder chemischen Vorspannens betrifft, dieses Verfahren auch für Borosilicatgläser anwendbar sein, jedoch wird in der gesamten Schrift in keinster Weise darauf eingegangen, wie Borosilicatgläser welcher Zusammensetzung konkret unter welchen Verfahrensbedingungen mit welchen Ergebnissen chemisch vorspannbar sein sollen. Es wird lediglich pauschal behauptet, alle Gläser mit α zwischen 3,0 und 9,5 x 10⁻⁶ K⁻¹ und E zwischen 6.0 und 9,0 x 10⁴ N/mm² seien geeignet, ohne daß zur Lösung dieses Aspekts der Aufgabe eine Lehre zum technischen Handeln mit experimentellen Hinweisen gegeben würde. Sämtliche Ausführungsbeispiele betreffen das thermische Vorspannen von Natron-Kalk-Glasscheiben.

Die in der Patentschrift DE 44 30 710 C1 beschriebene Erfindung hat u. a. die Aufgabe ein Borosilicatglas zur Verfügung zu stellen, das chemisch härtbar ist. Es wird dargelegt, daß Gläser, die keine Lithiumionen enthalten, damit nicht zur chemischen Härtung unterhalb der Transformationstemperatur Tg geeignet seien. Zwar ist Li₂O im Hauptanspruch nur fakultative Komponente der borsäurearmen Borosilicatgläser gemäß jener Erfindung, jedoch ist es in ihren bevorzugten Ausführungsformen zwingender Bestandteil, und auch aus der Beschreibung geht hervor, daß Li₂O als ausschlaggebend für ein unterhalb von Tg chemisch härtbares Glas angesehen wird.

Lithiumoxid hat nun, wie auch die anderen Alkalioxide, im Glas den Nachteil, die Wärmedehnung zu erhöhen und die chemische Beständigkeit herabzusetzen. Außerdem setzt es die Viskosität herab, erhöht so die Entmischungs- und Keimbildungsneigung des Glases, wodurch Trübungen auftreten können.

Aus JP 4-70262 B2 ist bekannt, daß Borosilicatgläser mit einem für diese Gläser sehr hohen Anteil an Alkalioxiden (10 - 32 Gew.-% R₂O) durchaus chemisch vorspannbar sind. Jedoch weisen die Gläser aufgrund dieses hohen Alkaligehalts eine hohe thermische Ausdehnung auf.

CS 240 148 B offenbart ein Verfahren zum Härten von Borosilicatglasern, dem ein hoher Ladungsauftrag von 5,5 bis 7,4 kCm⁻¹ zugrunde liegt.

JP 58-156 554 A beschreibt das Vorspannen von CaO-armen und ZnO-freien Borosilicatgläsern, bei dem die Härtung durch eine Verminderung der Na₂O-Konzentration an der Glasoberfläche entsteht.

Es ist nun Aufgabe der Erfindung, ein Glas zu finden, das eine geringe thermische Ausdehnung und damit eine hohe Temperaturunterschiedsfestigkeit besitzt und das sich chemisch vorspannen läßt und nach dem Vorspannen eine erhöhte Biegezugfestigkeit aufweist.

Diese Aufgabe wird durch die im Patentanspruch 1 beschriebene Verwendung eines Glaskörpers gelöst.

Gläser der in Anspruch 1 genannten, kein Li₂O und nur wenig Na₂O enthaltenden Zusammensetzung (SiO₂ 70 - 85; B₂O₃ 9 - 15; Na₂O 1 - 5; K₂O 1 - < 5; Al₂O₃ 1 - 5; CaO 0 - 3; MgO 0 - 3; SrO + BaO 0 - 2; ZnO 1 - 3; ZrO₂ 0 - 3,5 mit CaO + ZnO 2 - 6 in Gew.-% auf Oxidbasis) weisen eine geringe Wärmeausdehnung und eine geringe spezifische Wärmespannung auf, die eine besonders hohe Temperaturunterschiedsfestigkeit kennzeichnet. Glaskörper dieser Zusammensetzung können thermisch vorgespannt werden, und überraschenderweise, nämlich entgegen der Lehrmeinung, können sie auch in herkömmlichen Ionenaustauschverfahren unterhalb von Tg chemisch vorgespannt werden.

Die Glaskörper werden in Salzbädern, vorzugsweise in Bädern, die aus 100 Gew.-% bis mindestens 90 Gew.-% Kaliumsalzen bestehen, bei Badtemperaturen zwischen 400 und 550 °C, bevorzugt zwischen 450 °C und 520 °C, besonders bevor zugt bei höchstens 500 °C 2 bis 25 h, bevorzugt zwischen 5 und 10 h, besonders bevorzugt mindestens 6 h belassen. Durch eine solche Behandlung werden Ionenaustauschtiefen zwischen 10 und 40 µm bei einer Oberflächenkonzentration des Kaliumoxid von 4 bis 8 Gew.-% erreicht, wobei niedrigere Temperaturen höhere Verweilzeiten erforderlich machen. Für das Kaliumsalzbad können alle gängigen Kaliumsalze verwendet werden, deren Anionen im angegebenen Temperaturbereich stabil sind. Vorzugsweise wird KNO₃ verwendet. Das Salzbad (in der Regel mit 100 % Kaliumsalz beginnend) wird dann erneuert, wenn durch den Austausch der Kaliumionen-Gehalt soweit abgesunken ist, daß die gewünschte Austauschtiefe nicht mehr erreicht wird. Das ist in der Regel bei < 90 Gew.-% Kaliumsalzen der Fall. Vorzugsweise wird das Bad bereits erneuert, wenn der Kaliumsalz-Gehalt unter 97 Gew.-% sinkt, da mit sinkendem K⁺-Gehalt die benötigte Ionenaustauschzeit ansteigt.

Daß Glaskörper der genannten Zusammensetzung unterhalb der Transformationstemperatur Tg erfolgreich chemisch vorspannbar sind, ist unerwartet und daher um so erfreulicher. Die Gläser enthalten keine Lithiumionen und nur wenig Natriumionen (1 - 5 Gew.-% Na₂O). Damit enthalten sie teilweise weniger Na-Ionen als das schon erwähnte nicht chemisch vorspannbare Borosilicatglas 3.3 mit 3,3 Gew.-% Na₂O. Schon ein Na₂O-Gehalt von 1 - 3 Gew.-% ist hier für das Vorspannen ausreichend. Ein etwas höherer Gehalt (- 5 Gew.-%) kann jedoch zur Verbesserung der schmelztechnischen Eigenschaften sinnvoll sein.

Daß in der Oberfläche der Gläser dennoch eine Druckspannung aufgebaut wird, kann an der durch die Zusammensetzung bedingten Glasstruktur liegen und auch daran, daß auch zweiwertige Ionen, insbesondere Ca²⁺ und Zn²⁺, die im Glas zu insgesamt mindestens 2 Gew.-% vorhanden sind, gegen K⁺ aus dem Salzbad ausgetauscht werden. Außerdem fördert der höhere Transformationsbereich des Glases die Bildung einer erhöhten Druckspannung in der Oberfläche durch die geringere Neigung der Relaxation während des chemischen Vorspannprozesses.

Aufgrund der besonderen Güte der Gläser hinsichtlich der glastechnischen Eigenschaften, der Temperaturunterschiedsfestigkeit und der Festigkeit nach dem Vorspannen wird die Verwendung von Gläsern des folgenden Zusammensetzungsbereiches (in Gew.-% auf Oxidbasis) bevorzugt: SiO₂ 73 - 78; B₂O₃ 9 - 12; Na₂O 1 - 5; K₂O 1 - < 5; Al₂O₃ 1 - 4; CaO 1 - 3; ZnO 1 - 2; ZrO₂ 0,5 - 3.

In einer weiteren bevorzugten Ausführungsform der Erfindung werden Glaskörper der genannten Zusammensetzungen verwendet, die auf einer Floatanlage hergestellt wurden. Anscheinend erhöht diese "Vorbehandlung" die Fähigkeit des Glases, chemisch vorgespannt zu werden. Vermutlich kommt es während des Floatprozesses zu Wechselwirkungen zwischen Schutzgasatmosphäre (i.a. Formiergas) und Glas und/oder zwischen Zinnbad und Glas, wodurch der Austausch mit Kaliumionen gefördert wird.

Durch die erfindungsgemäße Verwendung der Gläser des genannten Zusammensetzungsbereiches zur Erzeugung chemisch vorgespannter Gläser erhält man Glaskörper, die die hervorragenden Eigenschaften von alkaliarmen Borosilicatgläsern, beispielsweise bzgl. thermischer Belastungen, und die sehr guten Festigkeitseigenschaften von chemisch geharteten Gläsern in sich vereinen.

Diese Gläser sind für alle Anwendungszwecke für chemisch gehärtete Gläser, z. B. als Lampenglas, Glas für die Vakuumtechnik, für den Chemieanlagenbau und für technische Anlagen, Zentrifugengläser in der Flugzeugindustrie, Abdeckscheiben für Fotokopierer usw. bestens geeignet.

Diese chemisch vorgespannten Borosilicatglaskörper, vorzugsweise in Form von Glasplatten oder -scheiben, sind besonders aufgrund ihrer hohen Temperaturunterschiedsfestigkeit sehr gut geeignet für die Verwendung als Brandschutzglas, z. B. nach DIN 4102 Teil 13.

Die Gläser zerfallen bei mechanischer Zerstörung nicht in kleine Krümel, sie erfüllen also die Anforderungen bzgl. Krümelbruch für ein Sicherheitsglas nicht und sind in diesem Bereich den entsprechenden thermisch vorgespannten Gläsern unterlegen.

Ausgesprochen vorteilhaft gegenüber den thermisch vorgespannten Gläsern ist jedoch, daß auch nicht-ebene, also in beliebigen Formen gebogene Glaskörper, speziell Glasplatten oder -scheiben, vorgespannt werden können und deren Form bei diesem Prozeß erhalten bleibt.

### Beispiel:

Die erfindungsgemäße Verwendung wird anhand eines Ausführungsbeispiels (A) und eines Vergleichsbeispiels (V), eines Borosilicatglases 3.3 der bereits genannten Zusammensetzung näher erläutert. In der Tabelle sind die Glaszusammensetzungen sowie einige relevante Eigenschaften der Gläser vor und nach dem Vorspannen aufgeführt.

Bei ähnlicher Oberflächenkonzentration an K₂O im Vergleichs- und im Ausführungsbeispiel weist das Glas gemäß der Erfindung aufgrund einer größeren lonenaustauschtiefe große Festigkeitssteigerungen auf, während im Vergleichsglas die Festigkeitseigenschaften nicht nennenswert verbessert werden. Daß das Vergleichsbeispiel überhaupt geringfügige Verbesserungen der Festigkeitseigenschaften aufweist, mag auf seine Herstellung im Float-Verfahren zurückzuführen sein.

Die Gläser wurden aus üblichen Rohstoffen erschmolzen und auf einer herkömmlichen Floatanlage hergestellt. Aus den so erhaltenen Borosilicat-Flachglasscheiben wurden pro Beispiel 50 Proben der Abmessungen 100 mm x 100 mm x 3.3 mm hergestellt. Diese wurden mit Schmirgelpapier von 220er Körnung naß verletzt und nach 24stündiger Lagerung geprüft. Die so vorbereiteten Proben wurden in einer KNO₃-Schmelze (KNO₃-Gehalt > 99 %) bei 480 °C 8 h chemisch vorgespannt.

Zur Bestimmung der in der Tabelle genannten Eigenschaften und Größen wurden folgende physikalische Untersuchungsmethoden angewandt:

Der Konzentrationsverlauf von Ionen in der Austauschzone wurde mittels energiedispersiver Röntgenanalyse (EDX, quantitativer line scan) bestimmt. So konnten die Ionenaustauschtiefe und die Oberflächenkonzentration an K₂O ermittelt werden.

Die Biegezugfestigkeit wurde nach DIN 52292 T1 bestimmt. Als Wert angegeben sind die 5 %-Fraktile der Weibull-Verteilung.

Die Stoßprüfung wurde analog dem Federhammer nach EN 60 335 T1 durchgeführt. Mit einem Fallkörper der Masse 250 g, der eine Polyamid-Halbkugel (Rockwellhärte R 100 mit Radius 10 mm) an der Spitze trägt, wurde die Stoßfestigkeit geprüft, indem der Fallkörper aus steigenden Höhen (durchgeführt in Stufen von 5 cm) auf die Probe fallengelassen wurde. In den Stoßfestigkeitswert ging die Höhe ein, bei der das Probestück zu Bruch ging. Angegeben sind auch hier die 5 %-Fraktile aus der Weibull-Verteilung.

**Tabelle**

| Zusammensetzung (in Gew.-% auf Oxidbasis) der Gläser (A = Ausführungsbeispiel, V = Vergleichsbeispiel) und deren wesentliche Eigenschaften. | | |
|---|---|---|
| | A | V |
| SiO₂ | 75,7 | 80,9 |
| B₂O₃ | 10,0 | 12,8 |
| Na₂O | 2,9 | 3,3 |
| K₂O | 2,6 | 0,6 |
| Al₂O₃ | 2,6 | 2,4 |
| CaO | 2,9 | - |
| ZrO₂ | 2,6 | - |
| ZnO | 1,9 | - |
| Transformationstemperatur Tg [°C] | 585 | 530 |
| thermischer Ausdehnungskoeffizient α [10⁻⁶/K] | 4,0 | 3,3 |
| Ionenaustauschtiefe [µm] | 35 - 40 | 15 - 20 |
| Oberflächenkonzentration an K₂O [Gew.-%] | 6 | 5 |
| Biegezugfestigkeit (5 %-Fraktil aus Weibull-Verteilung [N/mm²]): | | |
| - nicht vorgespannt | 32,9 | 33,6 |
| - chemisch vorgespannt | 67,9 | 35,6 |
| Stoßfestigkeit (5 %-Fraktil aus Weibull-Verteilung [Nm]): | | |
| - nicht vorgespannt | 0,11 | 0,10 |
| - chemisch vorgespannt | 0,27 | 0,12 |

## Patentansprüche

1. Verwendung eines Glaskörpers mit einer Zusammensetzung (in Gew.-% auf O-xidbasis von:
| | |
|---|---|
| SiO₂ | 70 - 85 |
| B₂O₃ | 9 - 15 |
| Na₂O | 1 - 5 |
| K₂O | 1 - < 5 |
| Al₂O₃ | 1 - 5 |
| MgO | 0 - 3 |
| SrO + BaO | 0 - 2 |
| CaO | 0 - 3 |
| ZnO | 1 - 3 |
| mit CaO + ZnO | 2 - 6 |
| ZrO₂ | 0 - 3,5 |
und ggf. Läutermittel in den üblichen Mengen
zur Erzeugung eines chemisch vorgespannten Glaskörpers in einem herkömmlichen Ionenaustauschverfahren unterhalb der Transformationstemperatur T_{g} des Glases.

2. Verwendung eines Glaskörpers nach Anspruch 1,
in einem zu mindestens 90 Gew.-% aus Kaliumsalzen bestehenden lonenaustauschbad.

3. Verwendung eines Glaskörpers nach Anspruch 2,
bei einer Temperatur zwischen 400 und 550 °C und bei einer Verweilzeit zwischen 2 und 25 h.

4. Verwendung eines Glaskörpers nach wenigstens einem der Ansprüche 1 bis 3,
mit einer Zusammensetzung (in Gew.-% auf Oxidbasis) von
| | |
|---|---|
| SiO₂ | 73 - 78 |
| B₂O₃ | 9 - 12 |
| Na₂O | 1 - 5 |
| K₂O | 1 - < 5 |
| Al₂O₃ | 1 - 4 |
| CaO | 1 - 3 |
| ZnO | 1 - 2 |
| ZrO₂ | 0,5 - 3 |
und ggf. Läutermittel in den üblichen Mengen.

5. Verwendung eines auf einer Floatanlage hergestellten Glaskörpers nach wenigstens einem der Ansprüche 1 bis 4.

## Claims

1. Use of a glass body having a composition (in % by weight, based on oxide) of:
| | |
|---|---|
| SiO₂ | 70 - 85 |
| B₂O₃ | 9 - 15 |
| Na₂O | 1 - 5 |
| K₂O | 1 - < 5 |
| Al₂O₃ | 1 - 5 |
| MgO | 0 - 3 |
| SrO + BaO | 0 - 2 |
| CaO | 0 - 3 |
| ZnO | 1 - 3 |
| with CaO + ZnO | 2 - 6 |
| ZrO₂ | 0 - 3.5 |
and optionally refining agents in the standard quantities to produce a chemically tempered glass body in a conventional ion exchange process below the transformation temperature T_{g} of the glass.

2. Use of a glass body according to Claim 1 in an ion exchange bath which comprises at least 90% by weight potassium salts.

3. Use of a glass body according to Claim 2 at a temperature between 400 and 550°C and with a residence time of between 2 and 25 h.

4. Use of a glass body according to at least one of Claims 1 to 3 with a composition (in % by weight, based on oxide) of
| | |
|---|---|
| SiO₂ | 73 - 78 |
| B₂O₃ | 9 - 12 |
| Na₂O | 1 - 5 |
| K₂O | 1 - < 5 |
| Al₂O₃ | 1 - 4 |
| CaO | 1 - 3 |
| ZnO | 1 - 2 |
| ZrO₂ | 0.5 - 3 |
and if appropriate refining agents in the standard quantities.

5. Use of a glass body according to at least one of Claims 1 to 4 produced on a float glass installation.

## Revendications

1. Utilisation d'un corps en verre de composition suivante (en % en poids pour les oxydes) :
| | |
|---|---|
| SiO₂ | 70 - 85 |
| B₂O₃ | 9 - 15 |
| Na₂O | 1 - 5 |
| K₂O | 1 - < 5 |
| Al₂O₃ | 1 - 5 |
| MgO | 0 - 3 |
| SrO + BaO | 0 - 2 |
| CaO | 0 - 3 |
| ZnO | 1 - 3 |
| avec CaO + ZnO | 2 - 6 |
| ZrO₂ | 0 - 3,5 |
et d'éventuels éléments d'affinage dans les quantités usuelles,
pour la création d'un corps en verre précontraint chimiquement, dans un procédé habituel d'échange d'ions en dessous de la température T_{g} de transformation du verre.

2. Utilisation d'un corps en verre selon la revendication 1, dans un bain d'échange d'ions constitué à au moins 90 % en poids de sels de potassium.

3. Utilisation d'un corps en verre selon la revendication 2, à une température comprise entre 400 et 550°C et pendant un temps de séjour compris entre 2 et 25 h.

4. Utilisation d'un corps en verre selon au moins l'une des revendications 1 à 3, de composition suivante (en % en poids pour les oxydes) :
| | |
|---|---|
| SiO₂ | 73 - 78 |
| B₂O₃ | 9 - 12 |
| Na₂O | 1 - 5 |
| K₂O | 1 - < 5 |
| Al₂O₃ | 1 - 4 |
| CaO | 1 - 3 |
| ZnO | 1 - 2 |
| ZrO₂ | 0,5 - 3 |
et d'éventuels éléments d'affinage dans les quantités usuelles.

5. Utilisation d'un corps en verre selon au moins l'une des revendications 1 à 4, fabriqué dans une installation de fabrication de verre flotté.
